Europäisches Patentamt

European Patent Office

Office européen des brevets

(19)

(11) Veröffentlichungsnummer: **0 239 945 B1**

(12) **EUROPÄISCHE PATENTSCHRIFT**

(45) Veröffentlichungstag der Patentschrift: **13.11.91**

(51) Int. Cl.5: **H02G 3/04**

(21) Anmeldenummer: **87104551.4**

(22) Anmeldetag: **27.03.87**

(54) **Leitungsführungskanal.**

(30) Priorität: **03.04.86 DE 8608883 U**

(43) Veröffentlichungstag der Anmeldung:
**07.10.87 Patentblatt 87/41**

(45) Bekanntmachung des Hinweises auf die
Patenterteilung:
**13.11.91 Patentblatt 91/46**

(84) Benannte Vertragsstaaten:
**AT BE CH DE ES FR GB IT LI NL SE**

(56) Entgegenhaltungen:
**AT-B- 368 326**
**DE-U- 8 433 145**
**DE-U- 8 520 266**
**FR-A- 2 387 407**

(73) Patentinhaber: **TEHALIT Kunststoffwerk GmbH**
**Postfach 128**
**W-6751 Heltersberg/Pfalz(DE)**

(72) Erfinder: **Pollak, Gottfried, Dipl.-Ing.**
**Finkenweg 2**
**W-6757 Waldfischbach-Burgalben(DE)**

(74) Vertreter: **Patentanwälte Dipl.-Ing. F.W. Möll**
**Dipl.-Ing. H.Ch. Bitterich**
**Langstrasse 5 Postfach 2080**
**W-6740 Landau/Pfalz(DE)**

## Beschreibung

Die Erfindung betrifft einen Leitungsführungskanal mit im wesentlichen rechteckigem Querschnitt und einer offenen Seite zum Einführen der zu verlegenden elektrischen Leitungen gemäß dem Oberbegriff des Anspruchs 1.

Leitungsführungskanäle sind in großer Zahl bekannt, beispielsweise aus der DE-A 21 23 958, den DE-B 12 16 957, 12 76 153, 20 17 232 oder auch den DE-U 77 11 728, 84 33 145. Sie bestehen aus extrudiertem, thermoplastischem Kunststoff, aus stranggepreßtem Aluminium oder aus profiliertem Stahlblech. Die offene Seite der Kanäle kann mit einem Deckel abgedeckt werden.

Um zu verhindern, daß bei abgenommenem Deckel die bereits im Leitungsführungskanal verlegten elektrischen Leitungen herausfallen, wird die offene Seite der Leitungsführungskanäle mit Hilfe von Stegen bzw. Klammern überbrückt.

Diese Klammern sollen eine Vielzahl von Bedingungen erfüllen. Sie sollen an beliebigen Stellen des Leitungsführungskanals anbringbar sein, um auf die Besonderheiten jeder Baustelle flexibel reagieren zu können. Die Verbindung zwischen Klammer und Kanal soll fest sein, um das Herausfallen von Leitungen sicher zu verhindern. Die Verbindung soll lösbar sein, um jederzeit Leitungen herausnehmen oder wieder hineinlegen zu können. Die Klammern sollen das Aufschnappen und Lösen des Deckels nicht behindern, sie sollen bei Waagerecht-, Senkrecht- und Über-Kopf-Montage gleich gut halten usw.

Die DE-U 84 33 145 zeigt eine Konstruktion, bei der die Klammer wie eine symmetrische Brücke geformt ist. Hinter einer glatten, federnden Frontplatte ist eine Rückplatte angeformt, deren beide Enden als Haken ausgebildet sind. Diese Haken verhaken sich mit den entsprechend profilierten Endleisten des Kanalunterteils. Kanalunterteil und alle Teile der Klammern müssen elastisch sein, um die Klammern einsetzen und bei Bedarf wieder lösen zu können.

Seit vielen Jahren sind auch einfache, aus Metall oder Kunststoff bestehende Klammern zum überbrücken der offenen Seite von Leitungsführungskanälen im Gebrauch. Deren beide Enden sind hakenförmig gebogen und werden von hinten in die seitlichen Rastleisten, die üblicherweise zum Festhalten des Deckels dienen, eingerastet. Diese Klammern verhindern nicht nur das Herausfallen von bereits in den Installationskanal eingelegten elektrischen Leitungen bei abgenommenem Deckel, sondern halten auch die Kanalseitenwandungen formgerecht zusammen.

Aus der DE-A-21 23 958 ist eine weitere Konstruktion bekannt, bei der die die offene Seite des Leitungsführungskanals verschließenden Stege nur einseitig befestigt sind. Die Befestigung zwischen Steg und Kanal erfolgt mit Hilfe von Verbindungsgliedern, die beispielsweise nach Art eines Druckknopfes in entsprechende Bohrungen im Steg einrasten. Gegebenenfalls sind die Stege auch noch mit einer zusätzlichen Stütze gegen den Kanalboden abgestützt. Auch bei dieser Konstruktion muß der Kanal nachträglich bearbeitet werden, außerdem ist die Montage kompliziert und die Festigkeit relativ gering, so daß sich diese Konstruktion in der Praxis nicht durchsetzen konnte.

Der vorliegenden Erfindung liegt die Aufgabe zugrunde, einen Leitungsführungskanal der eingangs genannten Art anzugeben, dessen offene Seite mit an beliebigen Stellen einfach aufsteckbaren und ebenso einfach wieder lösbaren Klammern sicher und montagefreundlich überbrückbar ist, ohne daß das nachträgliche Einlegen oder Herausnehmen von elektrischen leitungen behindert wird.

Diese Aufgabe löst ein Leitungsführungskanal mit den Merkmalen des Kennzeichens des Patentanspruchs 1.

Damit ergeben sich die Vorteile, daß die Klammern an wirklich jeder beliebigen Stelle aufgesteckt und bei Bedarf problemlos nach rechts oder links in die gewünschte Position verschoben werden können, jedoch auch bei senkrechter Montage nicht von selbst verrutschen, daß sie dank der ungleichen Ausbildung von Kopf und Fuß zum nachträglichen Einlegen oder Herausnehmen von Leitungen kurzzeitig federnd verschwenkt werden können, ohne daß irgendwelche Verbindungen gelöst oder die Kanalwandungen zusammengedrückt werden müßten, und daß auch das Aufsetzen und Wiederabnehmen des eigentlichen Deckels in keiner Weise behindert wird.

Eine vorteilhafte Weiterbildung der Erfindung besteht aus elastischen, sich flach gegen die Längsleisten abstützenden Zungen auf beiden Seiten des fußseitigen Hakenelements, die in Verbindung mit der Nut in dem fußseitigen Hakenelement dafür verantwortlich sind, daß die Klammer immer wieder selbsttätig federnd ihre Grundposition einnimmt. Die breite Ausgestaltung der kopfseitigen Nut erlaubt dabei das Einfedern der Kanalseitenwände beim Aufsetzen oder Abnehmen des Deckels.

Die Zungen und/oder das fußseitige Hakenelement sind vorzugsweise mit einer Anschrägung versehen, die das Aufsetzen der erfindungsgemäßen Klammer auf die Längsleisten des Kanalunterteils erleichtert.

Schließlich empfiehlt es sich, das Kanalunterteil und den Deckel aus faserverstärktem Kunststoff herzustellen. Dies ermöglicht erstmals die Herstellung von stabilen, robusten Leitungsführungskanälen und Deckeln, ohne auf Metalle zurückgreifen zu müssen.

Anhand der Zeichnung sollen die Erfindung und ihre Vorteile in Form eines Ausführungsbeispiels näher erläutert werden. Es zeigen:

Fig. 1 einen Querschnitt durch einen erfindungsgemäßen Leitungsführungskanal beim Aufsetzen einer Klammer,

Fig. 2 einen Querschnitt durch einen erfindungsgemäßen Leitungsführungskanal beim nachträglichen Einlegen weiterer Leitungen,

Fig. 3 einen Querschnitt durch den erfindungsgemäßen Leitungsführungskanal mit aufgesetztem Deckel,

Fig. 4 eine Draufsicht auf die Oberseite einer erfindungsgemäßen Klammer und

Fig. 5 einen Querschnitt durch die Klammer der Fig. 4 entlang der Linie V-V.

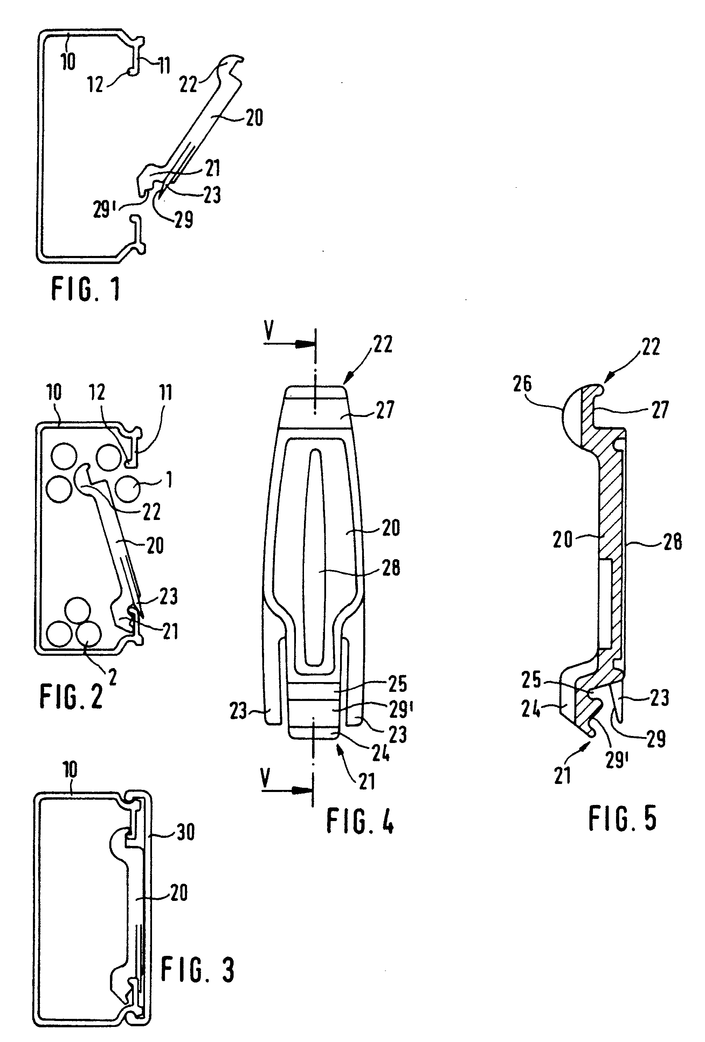

In den Fig. 1 bis 3 erkennt man einen Leitungsführungskanal 10 mit Kanalboden, zwei Kanalseitenwänden und einer offenen Vorderseite zum Einführen zu verlegender elektrischer Leitungen 1,2. Von den freien Enden der Kanalseitenwände ragen L-förmige Längsleisten 11 parallel zum Kanalboden in die freie Öffnung. Die kurzen Schenkel 12 der Längsleisten 11 sind in Richtung auf den Kanalboden abgewinkelt.

Zum überbrücken der offenen Kanalseite dient eine Klammer 20, deren Fuß 21 auf die Längsleisten 11 federnd aufsetzbar ist. Der Fuß 21 besteht hierzu im wesentlichen aus einem Hakenelement 24 und wenigstens einer federnden Zunge 23, die jeweils eine Anschrägung 29, 29' besitzen. Der Kopf 22 der Klammer 20 ist auf der der Längsleiste 11 zugewandten Seite angeschrägt, beispielsweise ballig, und kann so mit leichtem Druck hinter die Längsleiste 11 gedrückt werden.

In dieser, in der Fig. 2 dargestellten Lage ist die Klammer 20 an ihrem Fuß 21 unverlierbar, jedoch seitlich beliebig verschiebbar auf der Längsleiste 11 aufgesteckt. Kopfseitig kann sie dagegen federnd in den Leitungsführungskanal 10 hineingedruckt werden, so daß zwischen Klammer 20 und Kanal 10 ein Spalt entsteht, durch den in einfachster Weise entweder neue Leitungen 1 nachträglich in den Kanal 10 eingelegt oder bereits eingelegte Leitungen 2 nachträglich wieder aus dem Kanal 10 herausgenommen werden können.

Fig. 3 schließlich zeigt den Kanal 10 mit einge-. setzter Klammer 20 und aufgeschnapptem Deckel 30.

Die Fig. 4 und 5 zeigen in vergrößerter Darstellung die Klammer 20. Man erkennt den Klammerfuß 21, im wesentlichen gebildet aus dem Hakenelement 24 und zwei seitlich davon angeordneten, flachen, federnden Zungen 23. Im Hakenelement 24 ist eine Nut 25 vorgesehen. Deren Querschnitt entspricht mit geringem Spiel dem Querschnitt des kurzen Schenkels 12, so daß die Klammer 20 verschiebbar ist, sich aber schon bei einer geringen Verkantung an der Längsleiste 11, 12 verklemmt. Hakenelement 24 und Zungen 23 sind so dimensioniert, daß die Klammer 20 die in Fig. 3 gezeigte Grundstellung selbsttätig einnimmt.

Der Klammerkopf 22 wird durch ein weiteres Hakenelement gebildet, dessen Außenseite 26 abgeschrägt, bzw. ballig ist, um das Einschnappen des Klammerkopfes 22 hinter die Längsleisten 11 zu erleichtern.

Das kopfseitige Hakenelement 22 besitzt ebenfalls eine Nut 27, jedoch mit einem breiten Querschnitt, um ein Einfedern der Kanalseitenwände beim Aufsetzen bzw. Abnehmen des Deckels 30 nicht zu behindern.

**Patentansprüche**

1. Leitungsführungskanal (10) mit im wesentlichen rechteckigem Querschnitt und einer offenen Seite, die mit Hilfe eines aufschnappbaren Deckels (30) verschließbar ist, zum Einlegen der zu verlegenden elektrischen Leitungen (2), mit von den freien Enden der Kanalseitenwände ausgehenden, etwa parallel zum Kanalboden gerichteten Längsleisten (11) mit L-förmigem Querschnitt, deren kurzer Schenkel (12) zum Kanalboden gerichtet ist, und mit die offene Kanalseite überbrückenden Klammern (20), wobei die Klammern (20) federnd auf die Längsleisten (11, 12) aufsteckbare Füße (21), die die Längsleisten (11, 12) hintergreifende Hakenelemente (24) und die Längsleisten (11, 12) übergreifende Zungen (23) besitzen, die sich flach gegen die Längsleisten (11) abstützen und dafür sorgen, daß die Klammern (20) selbsttätig federnd immer wieder ihre Grundposition einnehmen, und Köpfe (22), die weitere Hakenelemente (26) besitzen, umfassen, dadurch gekennzeichnet, daß die fußseitigen Hakenelemente (24) eine Nut (25) besitzen, die den kurzen Schenkel (12) mit geringem Spiel umschließt, und daß die kopfseitigen Hakenelemente (26) eine das Einschnappen in den Kanal (10) erleichternde Schräge und eine mit dem Leistenfortsatz (12) zusammenwirkende breite Nut (27) aufweisen.

2. Leitungsführungskanal nach Anspruch 1, dadurch gekennzeichnet, daß beidseits des fußseitigen Hakenelements (24) je eine Zunge (23) angeordnet ist.

3. Leitungsführungskanal nach Anspruch 1 oder 2, dadurch gekennzeichnet, daß Zunge (23) und/oder fußseitiges Hakenelement (24) eine das Aufsetzen auf die Längsleiste (11) erleichternde Anschrägung (29, 29') besitzen.

4. Leitungsführungskanal nach Anspruch 1, 2 oder 3, dadurch gekennzeichnet, daß der Leitungsführungskanal (10) und gegebenenfalls der Deckel (30) aus faserverstärktem Kunststoff bestehen.

**Claims**

1. A cable conduit (10) of substantially rectangular cross-section having one open side which can be closed by means of a snap-on cover (30), for the insertion of the electrical cables (2) which are to be installed, comprising longitudinal strips (11) which commence from the free ends of the conduit side walls, extend approximately in parallel to the conduit base, are of L-shaped cross-section, and the short flank (12) of which is directed towards the conduit base, and comprising clamps (20) which bridge the open side of the conduit, where the clamps (20) comprise feet (21) which can be positioned flexibly onto the longitudinal strips (11, 12) and which are provided with hook elements (24), which engage behind the longitudinal strips (11, 12), and tongues (23) which engage over the longitudinal strips (11, 12) and which rest flat against the longitudinal strips (11) and ensure that the clamps (20) always automatically flexibly re-assume their basic position, and comprise heads (22) which are provided with further hook elements (26), characterised in that the foot-end hook elements (24) contain a groove (25) which surrounds the short flank (12) with a small amount of play, and that the head-end hook elements (26) are provided with a slope, which facilitates the snapping into the conduit (10), and a wide groove (27) which cooperates with the strip projection (12).

2. A cable conduit as claimed in Claim 1, characterised in that a respective tongue (23) is arranged on both sides of the foot-end hook element (24).

3. A cable conduit as claimed in Claim 1 or 2, characterised in that the tongue (23) and/or the foot-end hook element (24) are provided with a sloping surface (29, 29') which facilitates the positioning onto the longitudinal strip (11).

4. A cable conduit as claimed in Claim 1, 2 or 3, characterised in that the cable conduit (10) and possibly the cover (30) are composed of fibre-reinforced synthetic resin.

**Revendications**

1. Conduit de câbles (10) avec section transversale à peu près rectangulaire et un côté ouvert qui peut être fermé au moyen d'un couvercle (30) clipsable, pour la pose de lignes électriques (2), avec des lèvres longitudinales (11) de section en L, partant des extrémités libres des parois latérales du conduit, orientées à peu près parallèlement au fond du conduit, dont la petite branche (12) est orientée vers le fond du conduit, et avec des agrafes 20 passant sur le côté ouvert du conduit, les agrafes 20 comportant des pieds 21, s'emboîtant élastiquement sur les lèvres longitudinales 11, 12 qui possèdent des éléments à crochet (24) passant derrière les lèvres longitudinales (11,12) et des languettes (23) passant sur les lèvres longitudinales (11,12), qui prennent appui à plat, contre les lèvres longitudinales (11) et veillent à ce que les agrafes (20) reprennent toujours élastiquement et automatiquement leur position de base, ainsi que des têtes (22) qui possèdent d'autres éléments à crochet (26), caractérisé en ce que les éléments à crochet (24), côté pied, présentent une rainure (25) qui entoure, avec un jeu réduit, la petite branche (12) et en ce que les éléments à crochet, côté tête (26), présentent une partie oblique facilitant l'encliquetage dans le conduit (10) et une rainure (27) large, coopérant avec le prolongement de lèvres (12).

2. Conduit de câbles selon la revendication 1, caractérisé en ce qu'il est prévu une languette (23) sur chacun des deux côtés de l'élément à crochet (24), côté pied.

3. Conduit de câbles selon la revendication 1 ou 2, caractérisé en ce que la languette (23) et/ou l'élément à crochet (24) côté pied, possède un chanfrein (29, 29') facilitant la mise en place sur la lèvre longitudinale (11).

4. Conduit de câbles selon la revendication 1,2 ou 3, caractérisé en ce que le conduit de câbles (10) et éventuellement le couvercle (30) sont en matière plastique renforcée aux fibres.

FIG. 1

FIG. 2

FIG. 3

FIG. 4

FIG. 5